Europäisches Patentamt

European Patent Office

Office européen des brevets

(19)

(11) Numéro de publication : **0 108 665**
**B1**

(12)

# FASCICULE DE BREVET EUROPÉEN

(45) Date de publication du fascicule du brevet :
30.12.86

(21) Numéro de dépôt : 83401959.8

(22) Date de dépôt : 07.10.83

(51) Int. Cl.⁴ : **B 01 D 35/12**, B 01 D 29/26,
B 01 D 29/38

(54) **Filtre à fluide.**

(30) Priorité : 11.10.82 FR 8216982

(43) Date de publication de la demande :
16.05.84 Bulletin 84/20

(45) Mention de la délivrance du brevet :
30.12.86 Bulletin 86/52

(84) Etats contractants désignés :
AT BE CH DE GB IT LI NL SE

(56) Documents cités :
EP-A- 0 022 021
FR-A- 2 120 940
FR-A- 2 138 238
FR-A- 2 143 694
FR-A- 2 181 510

(73) Titulaire : GEORGES MOATTI, Société Anonyme
125, Avenue Pierre Curie
F-78210 Saint-Cyr-L'Ecole (FR)

(72) Inventeur : Christophe Théophile Jean
9, rue Mozart
F-78330 Fontenay le Fleury (FR)
Inventeur : Moatti, Jean-Claude
13, rue Moreau Vauthier
F-92100 Boulogne (FR)

(74) Mandataire : Hoisnard, Jean-Claude et al
Cabinet Beau de Lomenie 55, rue d'Amsterdam
F-75008 Paris (FR)

Jouve, 18, rue St-Denis, 75001 Paris, France

## Description

EP-B-0 022 021 représente un filtre comprenant au moins un orifice d'admission du fluide à filtrer, un corps de filtre à l'intérieur duquel sont délimitées au moins deux chambres distinctes isolées l'une de l'autre, au moins deux empilements d'éléments de filtre, un premier de ces empilements étant contenu dans une première desdites chambres, le deuxième de ces empilements étant contenu dans la deuxième desdites chambres et y débouchant et ces deux empilements étant traversés par un alésage, un distributeur de fluide rotatif, coaxial audit alésage et dont l'une des extrémités dite deuxième extrémité est contenue dans la deuxième desdites chambres, un premier conduit interne à ce distributeur reliant le premier des empilements d'éléments de filtre à la deuxième desdites chambres de l'alésage débouchant dans au moins une cavité ménagée à la périphérie dudit distributeur, un moteur d'entraînement du distributeur de fluide attelé à l'autre extrémité dite première extrémité dudit distributeur.

Les filtres de ce type fonctionnent bien, tout en pouvant être améliorés, d'une part en prévoyant des dispositions structurelles permettant une utilisation hydraulique efficace du fluide contenu dans la deuxième chambre, d'autre part en simplifiant la conception et la mise en œuvre de chaque élément de filtre des deux dits empilements d'éléments de filtre.

L'invention propose un tel filtre amélioré dans lequel le premier conduit débouche librement sans changement de direction ni rétrécissement dans la deuxième desdites chambres à travers la deuxième extrémité du distributeur de fluide, cependant qu'un deuxième conduit interne audit distributeur met en communication ladite cavité avec la première extrémité du distributeur.

De manière préférée, les dispositions suivantes sont, en outre, adoptées :

L'orifice d'admission du fluide à filtrer et l'orifice d'échappement hors du corps de filtre du fluide filtré susceptible d'être véhiculé dans ledit deuxième conduit interne sont disposés sur l'extrémité du corps de filtre voisine de ladite première extrémité du distributeur ;

le moteur d'entraînement est du type à fluide sous pression, ledit deuxième conduit interne étant en communication avec l'admission du fluide d'alimentation dudit moteur ;

le deuxième conduit interne est, en outre, en communication avec un orifice d'échappement direct du fluide filtré hors du corps de filtre, cependant qu'une restriction est disposée dans le circuit d'alimentation du moteur ;

l'échappement du fluide hors du moteur communique avec ledit orifice d'échappement direct.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :

la figure 1 est une coupe axiale d'un filtre selon une première réalisation conforme à l'invention ; et,

la figure 2 est une coupe axiale d'une partie d'un filtre selon une deuxième réalisation également conforme à l'invention.

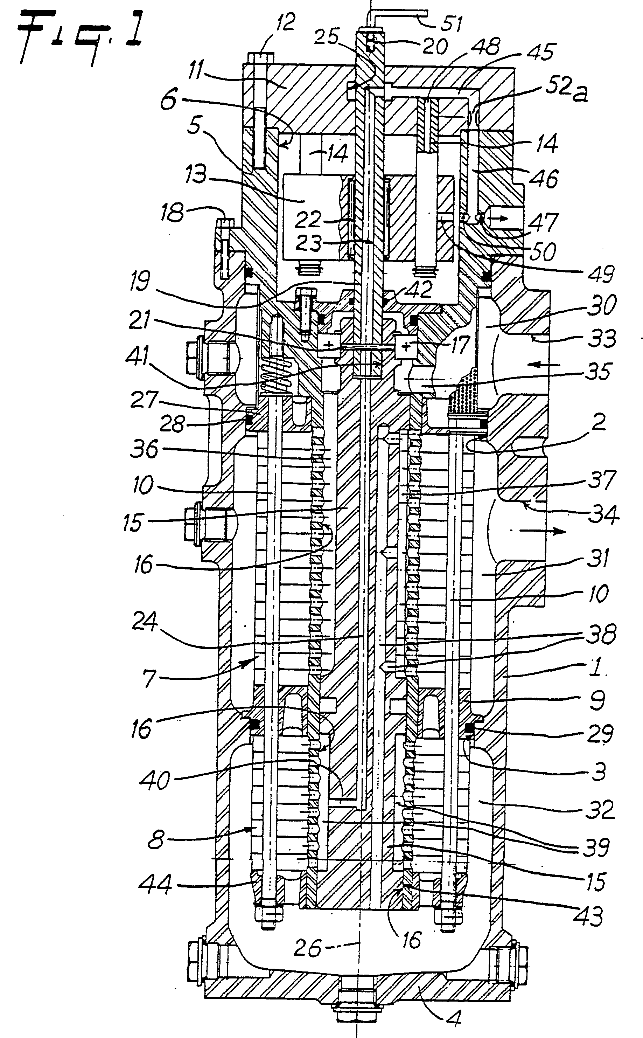

Le filtre de la figure 1 comprend :

un corps de filtre 1, présentant deux portées cylindriques espacées 2 et 3, et délimité par un fond transversal 4, monobloc avec le reste du corps 1,

un carter 5, présentant une ouverture supérieure 6, et fixé sur le corps 1 par des vis 18,

deux empilements 7 et 8, séparés par une plaque intermédiaire 9, et assemblés entre eux, avec la plaque 9 et avec le fond inférieur du carter 5, par des tirants 10 traversant l'ensemble,

un couvercle 11, adapté à l'ouverture 6 du carter 5 pour en réaliser l'obturation, et, fixé sur ce carter par des vis 12,

un moteur hydraulique 13, déjà connu en lui-même, monté à l'intérieur du carter 5, coulissant le long des tiges verticales de guidage 14,

un distributeur de fluide 15, qui est introduit dans un alésage central 16 dont sont munis les deux empilements 7, 8 et la plaque intermédiaire 9, qui est monté à rotation par rapport à ces empilements 7, 8 au moyen d'un roulement à billes 17 interposé entre lui-même et le carter 5,

un arbre d'entraînement 19, qui, d'une part, traverse le couvercle 11 pour déboucher, par son extrémité supérieure cannelée 20, à l'extérieur du filtre, et est rendu solidaire du distributeur 15 par une goupille transversale 21 et du moteur 13 par un dispositif connu de roue libre unidirectionnelle et coulissante, schématisé en 22, d'autre part, comporte un alésage central 23, qui débouche, à son extrémité inférieure, dans un conduit 24 interne au distributeur 15 et coaxial à l'alésage 16 et à l'axe de rotation 26 du distributeur et de l'arbre 19, et, à son extrémité supérieure dans une gorge circulaire 25 ménagée dans le couvercle 11.

Une plaque supérieure 27, délimitant l'empilement supérieur 7 des éléments de filtre, est en contact étanche (28) avec la portée cylindrique supérieure 2 du corps 1, cependant que la plaque intermédiaire 9 est elle-même en contact étanche (29) avec la portée inférieure 3. Ainsi, sont délimitées, dans le corps 1, trois chambres distinctes 30, 31, 32 séparées les unes des autres : la chambre supérieure 30, d'admission dans le filtre du fluide à filtrer, en communication avec un orifice d'admission 33 de ce fluide ; la chambre intermédiaire 31, qui délimite une première zone de filtration et reçoit la plus grande partie du fluide filtré par les éléments de l'empilement supérieur 7, en étant en communication avec un orifice 34 d'échappement hors du corps 1 de ce fluide filtré ; et, la chambre inférieure 32, qui délimite une deuxième zone d filtrage, et reçoit une partie du fluide filtré par les éléments de l'empilement 7, qui ne s'est pas échappée par l'orifice d'échappement 34.

Le fluide à filtrer, contenu dans la chambre d'admission 30, traverse un orifice 35 dont est muni le carter 5, et parvient dans une chambre 36 ménagée dans le distributeur 15 entre l'alésage 16 de l'empilement 7 et ce distributeur 15, une autre chambre 37, également ménagée de manière analogue à la chambre 36, étant isolée de cette chambre 36 et de la chambre d'admission 30. Le fluide contenu dans la chambre 36 traverse les éléments de filtre de l'empilement 7 et, dépouillé de ses impuretés, parvient dans la chambre 31. La plus grande partie de ce fluide filtré est évacuée par l'orifice d'échappement 34, la partie restante de ce fluide traversant, de la périphérie externe vers l'alésage 16, la partie des éléments de filtre communiquant avec la chambre 37 pour décolmater ces éléments des impuretés accumulées, les divers secteurs de chaque élément de filtre étant ainsi périodiquement décolmatés grâce à la rotation du distributeur d'une fraction de tour à chaque fois. Par des conduits 38, internes au distributeur 15, le fluide chargé d'impuretés de la chambre 37 parvient dans la chambre inférieure 32.

Ce fluide traverse, de la périphérie externe vers l'alésage 16 des éléments de l'empilement 8, ces éléments, et parvient, filtré, dans une chambre 39 ménagée, dans le distributeur 15, entre l'alésage 16 et ce distributeur. Des conduits 40 relient la chambre 39 au conduit 24. Il y a lieu de remarquer que le conduit interne 24 ne débouche qu'à l'extrémité supérieure 41 du distributeur 15, cette extrémité 41 étant évasée et recevant la partie inférieure de l'arbre 19, qui y est adaptée avec étanchéité (42). Par ailleurs, le distributeur 15 n'est guidé que par le roulement à billes 17 et l'alésage 16 et a sa partie inférieure 43 qui ne s'étend pas au-delà de l'empilement 8 et de la plaque inférieure 44 délimitant cet empilement. En particulier, la partie inférieure 43 du distributeur 15 n'atteint pas le fond 4 du corps 1 et n'est aucunement directement guidée par le corps 1.

A la partie supérieure du filtre, des conduits 45 et 46, ménagés dans le couvercle 11 et dans le carter 5, respectivement, relient la gorge 25 à un orifice 47 d'échappement complémentaire du fluide filtré par les éléments de l'empilement 8. A remarquer le rassemblement dans la moitié supérieure du filtre des orifices d'admission du fluide à filtrer 33 et d'échappement du fluide filtré 34 et 37, et, en particulier, la proximité des orifices 33 et 47.

Par ailleurs, on note que le moteur connu 13 a ses orifices d'admission 48 du fluide d'alimentation ménagés dans les tiges 14 qui débouchent à cet effet dans le conduit 45, ses orifices d'échappement 49 étant en communication, par l'intermédiaire de l'intérieur du carter 5, avec un conduit 50 ménagé dans ce carter et en communication permanente avec l'orifice d'échappement complémentaire 47. En outre, une restriction 52a est placée dans le conduit 46 ménagé dans le carter 5 afin de permettre la mise en pression, dans le conduit 45, du fluide d'alimentation du moteur 13.

Enfin, on remarque la possibilité d'adapter aux cannelures 20 de l'extrémité supérieure de l'arbre 19, une clé 51 pour l'entraînement manuel en rotation du distributeur 15.

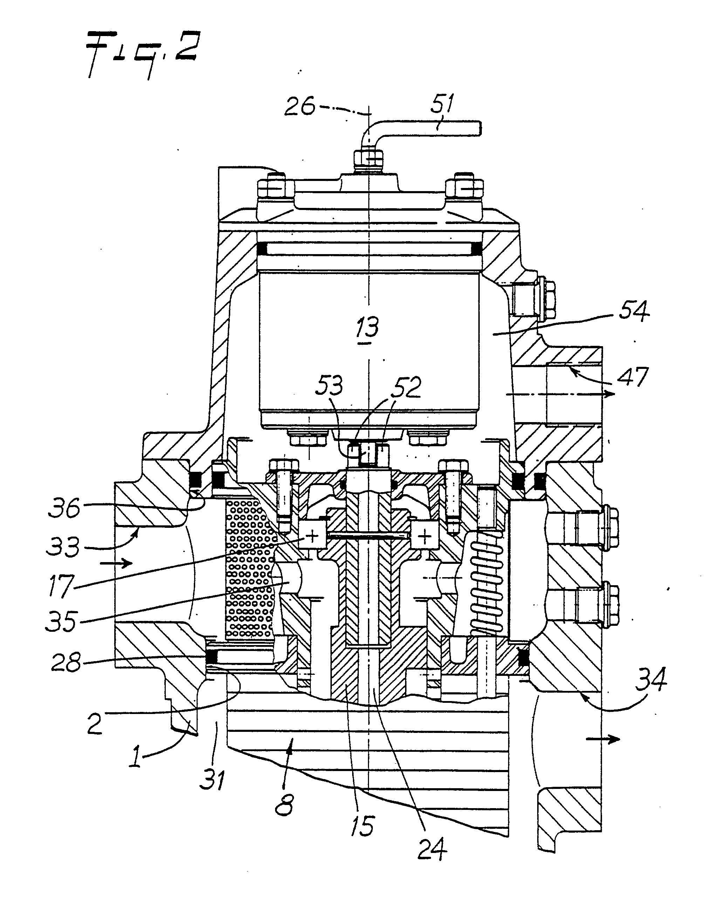

En regard de la figure 2, on retrouve le filtre déjà décrit, qui ne se distingue fondamentalement de la première réalisation de la figure 1 que par le fait que le moteur 13 n'est pas alimenté par le fluide filtré véhiculé par le conduit interne 24. Le cas d'une telle disposition se présente lorsque le moteur 13, de type hydraulique, a une alimentation en fluide et un échappement de fluide distincts du circuit de filtration de filtre, ou encore, lorsque le moteur 13 est électrique, ou analogue. L'extrémité supérieure du distributeur 15 est conformée en une fourche d'entraînement 52 qui coopère avec un carré d'entraînement 53 solidaire de l'arbre de sortie du moteur 13. Le conduit interne 24 débouche, à sa partie supérieure, à l'intérieur de la chambre 54 délimitée par le carter 5, qui est elle-même en communication avec le conduit d'échappement complémentaire 47.

La description qui vient d'être exposée permet de constater l'absence de toute chambre complémentaire à la partie inférieure du filtre, qui auparavant était ménagée entre le corps 1 et la plaque inférieure 44 de l'empilement 8, ainsi que de tout guidage du distributeur 15 par le fond 4 du corps 1.

La structure nouvelle obtenue est plus simple, plus compacte, et, par suite, moins coûteuse quant à sa réalisation. Elle est aussi plus fiable, car les étanchéités qu'il fallait autrefois réalisées ont, elles aussi, été supprimées.

A noter que cette structure convient dans tous les cas, que le moteur 13 soit hydraulique et alimenté en fluide par le fluide filtré lui-même (figure 1), ou ne soit pas alimenté par ce fluide (figure 2).

En outre, le regroupement des orifices d'admission 33 et d'échappement 34, 47 dans une même zone du filtre, est avantageuse, en ce qui concerne les raccordements du tuyautage qui doivent être réalisés. Cette zone est celle contenant également l'extrémité supérieure (41, 52) du distributeur 15.

## Revendications

1. Filtre comprenant :
   au moins un orifice (33) d'admission du fluide à filtrer,
   un corps de filtre (1) à l'intérieur duquel sont délimitées au moins deux chambres distinctes (31, 32) isolées l'une de l'autre,
   au moins deux empilements (7, 8) d'éléments de filtre, un premier (7) de ces empilements étant contenu dans une première (31) desdites chambres, le deuxième (8) de ces empilements étant contenu dans la deuxième (32) desdites chambres et y débouchant et ces deux empilements étant traversés par un alésage (16),

un distributeur de fluide (15) rotatif, coaxial audit alésage (16) et dont l'une des extrémités dite deuxième extrémité est contenue dans la deuxième (32) desdites chambres, un premier conduit (38) interne à ce distributeur reliant le premier (7) des empilements d'éléments de filtre à la deuxième (32) desdites chambres et l'alésage (16) débouchant dans au moins une cavité (39) ménagée à la périphérie dudit distributeur,

un moteur (13) d'entraînement du distributeur de fluide (15) attelé (21) à l'autre extrémité dite première extrémité (41) dudit distributeur, caractérisé en ce que ledit premier conduit (38) débouche librement sans changement de direction ni rétrécissement dans la deuxième (32) desdites chambres à travers ladite deuxième extrémité du distributeur de fluide (15) et, en ce qu'un deuxième conduit (24) interne audit distributeur met en communication ladite cavité (39) avec ladite première extrémité (41) dudit distributeur.

2. Filtre selon la revendication 1, caractérisé en ce que l'orifice d'admission (33) du fluide à filtrer et l'orifice (47) d'échappement hors du corps de filtre du fluide filtré susceptible d'être véhiculé dans ledit deuxième conduit interne (24) sont disposés sur l'extrémité du corps de filtre (1) voisine de ladite première extrémité (41) du distributeur.

3. Filtre selon l'une quelconque des revendications 1 et 2, caractérisé en ce que le moteur d'entraînement (13) est du type à fluide sous pression, ledit deuxième conduit interne (24) étant en communication (23, 25) avec l'admission (48) du fluide d'alimentation dudit moteur.

4. Filtre selon la revendication 3, caractérisé en ce que le deuxième conduit interne (24) est en outre en communication (45, 46) avec un orifice (47) d'échappement direct du fluide filtré hors du corps de filtre (1), cependant qu'une restriction (52) est disposée dans le circuit d'alimentation du moteur (13).

5. Filtre selon la revendication 4, caractérisé en ce que l'échappement (49) du fluide hors du moteur (13) communique (50) avec ledit orifice d'échappement direct (47).

**Claims**

1. Filter comprising :
at least one admission orifice (33) for the fluid to be filtered,
a filter body (1) inside which are defined at least two separate chambers (31, 32) insulated one from the other,
at least two stacks (7, 8) of filter elements, a first one (7) of these stacks being contained in a first one (31) of said chambers, whereas the second one (8) of said stacks is contained in the second one (32) of said chambers and issues therein, both stacks being traversed by a bore (16),

a rotary fluid distributor (15), co-axial to said bore (16) and of which one of the end, called second end, is contained in the second (32) of said chambers, a first conduit (38) internal to said distributor, connecting the first (7) of the stacks of filter elements to the second (32) of said chambers and the bore (16) issuing into at least one cavity (39) provided on the periphery of said distributor,

a motor (13) driving the fluid distributor (15) coupled (21) to the other end called first end (41) of said distributor,
characterized in that said first conduit (38) issues freely without any change of direction or narrowing of section into the second (32) of said chambers through the second end of the fluid distributor (15) and in that a second conduit (24) internal to said distributor joins said cavity (39) with said first end (41) of said distributor.

2. Filter according to claim 1, characterized in that the admission orifice (33) for the fluid to be filtered and the outlet orifice (47) for letting out of the filter body the filtered fluid for eventual conveying into said second internal conduit (24) are disposed on the end of the filter body (1) adjacent said first end (41) of the distributor.

3. Filter according to any one of claims 1 and 2, characterized in that the driving motor (13) is of the pressurized fluid type, said second internal conduit (24) communicating (23, 25) with the inlet (48) for the motor supplying fluid.

4. Filtre according to claim 3, characterized in that the second internal conduit (24) also communicates (45, 46) with an outlet orifice (47) for the direct flow of the filtered fluid out of the filter body (1), whereas a constriction (52) is provided in the supply circuit of the motor (13).

5. Filter according to claim 4, characterized in that the fluid outlet (49) for letting the fluid out of the motor (13) communicates (50) with said direct outlet orifice (47).

**Patentansprüche**

1. Filter, umfassend :
mindestens eine Öffnung (33) für den Eintritt des zu filternden Fluids,
einen Filterkörper (1), in dessem Inneren mindestens zwei separate, voneinander getrennte Kammern (31, 32) abgegrenzt sind,
mindestens zwei Stapel (7, 8) von Filterelementen, wobei ein erster (7) dieser Stapel in einer ersten (31) besagter Kammern enthalten ist, der zweite (8) dieser Stapel in der zweiten (32) dieser Kammern enthalten ist und dort einmündet, und diese beiden Stapel von einer Bohrung (16) durchsetzt sind,
einen koaxial mit der Bohrung (16) verlaufenden, drehbaren Fluidverteiler (15), dessen eines Ende, genannt das zweite Ende, in der zweiten Kammer (32) enthalten ist, wobei eine erste Leitung (38) innerhalb dieses Verteilers den ersten Stapel (7) von Filterelementen mit der zweiten Kammer (32) verbindet und die Bohrung (16) in mindestens einen am Umfang des Verteilers vorgesehenen Hohlraum (39) mündet,

einen Antriebsmotor (13) für den Fluidverteiler (15), welcher am anderen Ende, nämlich dem ersten Ende (41), des Verteilers angekuppelt (21) ist,

dadurch gekennzeichnet, daß die erste Leitung (38) ohne Richtungsänderung und ohne Verengung durch das zweite Ende des Fluidverteilers (15) frei in die zweite Kammer (32) einmündet, und daß eine zweite Leitung (24) innerhalb des Verteilers den Hohlraum (39) mit dem ersten Ende (41) des Verteilers in Verbindung setzt.

2. Filter nach Anspruch 1, dadurch gekennzeichnet, daß die Öffnung (33) für den Eintritt des zu filternden Fluids und die Öffnung (47) für den Austritt des gefilterten, in der zweiten Innenleitung (24) transportierbaren Fluids aus dem Filterkörper an dem nahe dem ersten Ende (41) des Verteilers befindlichen Ende des Filterkörpers (1) angeordnet sind.

3. Filter nach einem der Ansprüche 1 und 2, dadurch gekennzeichnet, daß der Antriebsmotor (13) vom Druckmitteltyp ist, wobei die zweite Innenleitung (24) mit dem Eintritt (48) des Fluids zur Speisung des Motors in Verbindung steht (23, 25).

4. Filter nach Anspruch 3, dadurch gekennzeichnet, daß die zweite Innenleitung (24) weiters mit einer Öffnung (47) für den direkten Austritt des gefilterten Fluids aus dem Filterkörper (1) in Verbindung steht (45, 46), wobei im Speisekreis des Motors (13) eine Drosselung (52) vorgesehen ist.

5. Filter nach Anspruch 4, dadurch gekennzeichnet, daß der Austritt (49) für das Fluid aus dem Motor (13) mit der Öffnung (47) für den direkten Austritt kommuniziert (50).

0 108 665

Fig. 1

Fig. 2